# EUROPÄISCHE PATENTSCHRIFT

(11) **EP 3 972 868 B1**
(45) Veröffentlichungstag und Bekanntmachung des Hinweises auf die Patenterteilung: **12.06.2024**
(21) Anmeldenummer: 20727184.2
(22) Anmeldetag: 14.05.2020
(51) Int. Cl.: B60K 26/00, B60W 30/18

(54) **GESCHWINDIGKEITSEINSTELL-SYSTEM FÜR EIN FAHRZEUG UND VERFAHREN ZUR EINSTELLUNG EINER FAHRGESCHWINDIGKEIT**
SPEED CONTROL SYSTEM FOR A VEHICLE, AND METHOD
SYSTÈME DE COMMANDE DE VITESSE POUR VÉHICULE, ET PROCÉDÉ

(30) Priorität: 20.05.2019 DE 102019113225
(43) Veröffentlichungstag der Anmeldung: 30.03.2022
(73) Patentinhaber: ZF CV Systems Europe BV, 1170 Brussels (BE)
(72) Erfinder: FLAUM, Nikolai, 30457 Hannover (DE); LÜLFING, Ralph-Carsten, 30826 Garbsen (DE); SCHÜNEMANN, Gerd, 30880 Laatzen (DE); WALLBAUM, Torsten, 31089 Duingen (DE)
(74) Vertreter: Rabe, Dirk-Heinrich
(86) Internationale Anmeldenummer: PCT/EP2020/063400
(87) Internationale Veröffentlichungsnummer: WO 2020/234095

(56) Entgegenhaltungen:
- EP-A1- 3 030 465
- WO-A1-2018/077813
- DE-A1-102015 212 024

## Beschreibung

Die Erfindung betrifft ein Geschwindigkeitseinstell-System für ein Fahrzeug, insbesondere ein Nutzfahrzeug, sowie ein Verfahren zur Einstellung einer Fahrgeschwindigkeit des Fahrzeugs.

Fahrzeuge weisen im Allgemeinen eine durch den Fahrer zu bedienende Fahrer-Betätigungseinrichtung, insbesondere ein Gaspedal oder Fahr-Pedal, zur Steuerung der Antriebsleistung auf. Je nach Antriebsmotor, z. B. Verbrennungsmotor, Elektromotor oder auch Hybridmotor, der einen Verbrennungsmotor und einen Elektromotor kombiniert, werden vom Fahrer über die Fahrer-Betätigungseinrichtung eingegebene Fahrer-Motoranforderungs-Signale von einer Motor-Steuereinrichtung ausgewertet, die nachfolgend entsprechend den Fahrzeugmotor ansteuert, z. B. eine Kraftstoffzufuhr beim Verbrennungsmotor oder eine Bestromung des Elektromotors bzw. der mehreren im Fahrzeug eingesetzten Elektromotoren. Somit wird im Allgemeinen ein aktives Niederdrücken des Fahrpedals als Beschleunigungs-Anforderung des Fahrers ausgelegt und entsprechend die Ansteuerung des Motors erhöht. Bei einigen Motorsteuerungs-Systemen ist es hierbei bekannt, ein schnelles Durchdrücken des Fahrpedals als sogenannten Kick-down auszulegen, der eine höhere Kraftstoffzufuhr einstellen kann, um eine höhere Beschleunigung zu ermöglichen.

Das Fahrzeug weist im Allgemeinen ein oder mehrere Bremssysteme auf, z. B. ein pneumatisches oder elektro-pneumatisches Bremssystem; weiterhin sind insbesondere in Nutzfahrzeugen Dauerbremssysteme bzw. verschleißfreie Bremsen, insbesondere im Antriebsstrang vorgesehene Retarder-Bremsen vorgesehen, die vom Fahrer gegebenenfalls durch eine zusätzliche Betätigungseinrichtung für eine verschleißfreie Bremsung aktiviert werden können. Fahrzeuge mit Elektromotoren können auch einen Rekuperations-Betrieb zur Wiedergewinnung der - kinetischen oder potentiellen - Fahrzeugenergie als elektrische Energie aufweisen, der somit eine Nutzbremse darstellt. Zur Verringerung der Fahrgeschwindigkeit, d. h. für einen aktiven Bremsvorgang, tritt der Fahrer im Allgemeinen ein Bremspedal, das nachfolgend bei einem elektronischen Bremssystem von einer Brems-Steuereinrichtung ausgelesen und ausgewertet wird, sodass entsprechend eine Abbremsung als negative Beschleunigung des Fahrzeugs durch Ansteuerung der Radbremsen und/oder Dauerbremsen eingestellt wird.

Bei Fahrzeugen mit Elektromotor und Rekuperations-Betrieb ist es grundsätzlich auch bekannt, den Rekuperations-Betrieb selbsttätig zu starten, wenn der Fahrer die Fahr-Anforderung durch Loslassen des Fahrpedals zurücknimmt, d. h. ein dem Schubbetrieb bei herkömmlichen Fahrzeugen entsprechender Motorbrems-Vorgang zur Wiedergewinnung elektrischer Energie genutzt wird. Somit sind die Rekuperations-Strategien im Allgemeinen auf beide Pedale verteilt.

Ergänzend sind im Fahrzeug im Allgemeinen Fahrstabilitätsregelungen und Komfort-Regelsysteme vorgesehen, die externe Brems-Anforderungen, sogenannte XBR-Requests ("eXternal Brake Request") an die elektronische Steuereinheit eines elektronischen Bremssystems senden, z. B. für Stabilitätsregelungen durch unsymmetrisches Aktivieren der Radbremsen sowie für Abstandshalte-Regelungen.

Hierbei sind insbesondere die Übergänge zwischen den verschiedenen Systemen, insbesondere bei der Auswertung der Fahrer-Anforderung und der Zuordnung entsprechender Steuersignale an den oder die Fahrzeugmotoren oder eines der Bremssysteme problematisch. Insbesondere ist aus Sicherheitsgründen eine Verfügbarkeit der als Reibungsbremsen ausgelegten Radbremsen erforderlich, die in der Lage ist, kurzfristig hohe Fahrzeugverzögerungen aufzubauen. Weiterhin ist es anzustreben, für den Fahrer ein angenehmes Fahrgefühl bzw. eine gute Dosierbarkeit sowohl der Beschleunigungs-Anforderungen als auch des Bremsverhaltens zu erreichen.

Die EP 0 633 155 B1 beschreibt ein Verfahren zur Steuerung des Antriebstrangs von Kraftfahrzeugen, bei dem Fahrpedalbewegungsabläufe überwacht und eine Motorleistungssteuerung und Schaltvorgänge analysiert werden, wobei Motorkennfelder und Schaltkennlinien berücksichtigt werden. Hierbei werden im Fahrpedalweg Kraftschwellen selektiv erzeugt, um dem Fahrer Schaltschwellen im Hinblick auf eine Verbrauchsoptimierung anzuzeigen. Durch derartige Verfahren kann dem Fahrer somit haptisch der Übergang zwischen verschiedenen Verfahrensstufen oder Regelbereichen angezeigt werden.

Die DE 10 2013 202 427 A1 beschreibt ein Fahrzeug mit einer im Fußraum angeordneten Einstelleinrichtung und ein Verfahren zum Steuern der Längsbewegung des Fahrzeugs. Hierbei kann der Fahrer seine Fahranforderungen insbesondere auch über eine einzige Bedienzone für das Beschleunigen und das Bremsen eingeben, wobei diese Bedienzone eine berührungsempfindliche Bedienfläche, z. B. ein Touchpad sein kann.

Die DE 20 2012 005 176 U1 beschreibt ein erweitertes Bremslicht für Pkw und Lkw, bei dem bei Ansteuerung des Bremspedals eine MotorAnforderung aktiviert werden kann.

Die DE 10 2016 005 117 B3 beschreibt ein Fahrzeug mit einem Automatikgetriebe, bei dem der Fahrer in üblicher Weise über ein Fahrpedal ein Sollmoment an die Antriebseinheit ausgibt, die selbständig entsprechende Gänge bzw. Übersetzungsverhältnisse des Getriebes einstellt. Bei einer unmittelbar bevorstehenden Ausführung der Gangrückschaltung erzeugt die Steuereinheit eine haptische Rückschalt-Meldung durch Variierung der Fahrpedal-Rückstellkraft.

In der DE 103 15 253 B4 wird eine Gaspedalvorrichtung beschrieben, die eine Pedalreaktionskraft-Bereitstellungsvorrichtung zum Bereitstellen einer Reaktionskraft an einem Gaspedal enthält. Die Reaktionskraft wird auf Grundlage des Niederdrückungsmaßes des Gaspedals durch den Fahrer geregelt.

Die EP 3 030 465 A1 beschreibt ein Fahrzeuggeschwindigkeitssteuersystem, das ein Fahrzeug veranlasst, gemäß einem Soll-Geschwindigkeitswert betrieben zu werden, durch Steuern einer durch ein Bremssystem angewandten Menge an Bremsmoment und einer durch einen Antriebsstrang angewandten Menge an Antriebsmoment auf ein oder mehrere Räder des Fahrzeugs, wobei das System betriebsfähig ist, ein Vorderradstufenereignis zu erfassen, bei dem ein Vorderrad auf ein Hindernis trifft, das einen plötzlichen Anstieg des Oberflächengradienten darstellt. Das System ist in Abhängigkeit von der Erfassung des Vorderradstufenereignisses betriebsfähig, zu veranlassen, dass ein Bremsmoment gegen ein Antriebsmoment in Erwartung eines entsprechenden Hinterradstufenereignisses angewandt wird, wobei das System betriebsfähig ist, das Bremsmoment wenigstens so lange anzuwenden, bis ein Hinterrad eine ausreichende Strecke zurückgelegt hat, um eine Stelle zu erreichen, an der das Vorderrad das Vorderradstufenereignis erfahren hat.

Der Erfindung liegt die Aufgabe zugrunde, ein Geschwindigkeitseinstell-System für ein Fahrzeug und ein Verfahren zum Einstellen einer Fahrgeschwindigkeit zu schaffen, die eine sichere Steuerung oder Regelung der Fahrgeschwindigkeit und eine einfache Bedienbarkeit für den Fahrer ermöglichen.

Diese Aufgabe wird durch ein Geschwindigkeitseinstell-System und ein Verfahren nach den unabhängigen Ansprüchen gelöst. Die Unteransprüche beschreiben bevorzugte Weiterbildungen.

Das erfindungsgemäße Geschwindigkeitseinstell-System kann insbesondere zur Durchführung eines erfindungsgemäßen Verfahrens eingesetzt werden; das erfindungsgemäße Verfahren kann insbesondere mit einem erfindungsgemäßen Geschwindigkeitseinstell-System eingesetzt werden.

Hierbei können das Geschwindigkeitseinstell-System und das Verfahren gemäß einer bevorzugten Ausbildung bei einem Fahrzeugmotor mit elektrischer Rekuperation, insbesondere einem Elektromotor oder einem Hybridmotor mit elektrischer Rekuperation eingesetzt werden.

Erfindungsgemäß ist eine vom Fahrer zu betätigende Betätigungseinrichtung, die mit einem Betätigungs-Parameter zu betätigen ist, als ein Geschwindigkeitseinstell-Pedal gemäß des unabhängien Anspruchs 1 vorgesehen, das mit einem eindimensionalen Betätigungs-Parameter zwischen einem unteren und einem oberen Anschlag zu verstellen ist, z. B. mit einem Schwenkwinkel oder auch entsprechend einer linearen Verstellung. Diese Betätigung wird durch einen Betätigungs-Sensor ausgelesen, der entsprechend ein Sensor-Signal an eine Geschwindigkeits-Steuereinrichtung ausgibt. Das Sensor-Signal kann somit insbesondere einen eindimensionalen Betätigungs-Parameter darstellen bzw. wiedergeben. Die Fahrer-Betätigungseinrichtung kann insbesondere eine eindimensionale Verstellung gegen eine Rückstellkraft ausbilden; es können jedoch auch Systeme mit z.B. einer berührungsempfindlichen Fläche ausgebildet sein, die somit nicht die mechanische Verstellung, sondern eine Berührung, z. B. eine Kraft oder einen Druck, sensieren.

Die Geschwindigkeits-Steuereinrichtung wertet nachfolgend das Sensor-Signal und somit die Fahrer-Betätigung aus und vergleicht diese mit einem Referenzwert, um in Abhängigkeit von diesem Vergleich zu entscheiden, ob ein Motor-Anforderungssignal an eine Motor-Steuereinrichtung oder ein Brems-Anforderungssignal an mindestens eine Brems-Steuereinrichtung ausgegeben wird. Hierbei kann insbesondere verglichen werden, ob der aktuelle Messwert kleiner oder größer als der Referenzwert ist. Der Referenzwert kann somit ein Neutral-Pedalwinkel sein; wenn der Fahrer somit einen größeren Betätigungs-Parameter eingibt, d.h. z.B. das Fahrer (Geschwindigkeitseinstell)-Betätigungspedal stärker durchtritt, wird dies als Anforderung des Fahrers für einen Beschleunigungsvorgang bzw. an eine Motoransteuerung verstanden, bei einer geringeren Betätigung hingegen als Bremsanforderung. Somit kann die Geschwindigkeits-Steuereinrichtung nachfolgend direkt eine Motoranforderung oder Bremsanforderung ausgeben.

Der Referenzwert bzw. die Neutralstellung kann z. B. bei dem halben Betätigungsweg des Betätigungs-Parameters, z. B. dem halben Pedalweg, vorgesehen sein; hier sind jedoch auch andere Auslegungen möglich, die das Fahrer-Gefühl entsprechend unterstützen und somit z. B. eine feinere Dosierbarkeit des Bremsvorgangs und/oder des Beschleunigungsvorgangs ermöglichen. Der Referenzwert bzw. die Neutralstellung kann fest vorgegeben, aber auch variabel sein. Sie kann z. B. auch durch das Fahrer-Verhalten geändert bzw. erlernt werden, um individuell für den jeweiligen Fahrer eine entsprechende Dosierbarkeit zu ermöglichen.

Im unabhängigen Anspruch 13 ist erfindungsgemäß ein Verfahren zum Einstellen einer Fahrgeschwindigkeit eines Fahrzeugs vorgesehen, das einen Antriebsstrang mit einem Fahrzeugmotor und ein Bremssystem aufweist.

Der in den unabhängigen Ansprüchen 1 und 13 definierte Referenzwert bzw. die Neutralstellung des Betätigungs-Parameters kann weiterhin auch abhängig von der Fahrgeschwindigkeit sein, und/oder abhängig von der Geschwindigkeit der Betätigung durch den Fahrer, d. h. z. B. von ihrer Pedalwinkel-Geschwindigkeit.

Eine Rückstellkraft kann ebenfalls fest vorgegeben sein, z. B. konstant oder auch - entsprechend einer Rückstellfeder - bei zunehmender Betätigung durch den Fahrer zunehmen. Ergänzend können auch weitere haptische Rückmeldungen vorgesehen sein, insbesondere kann hierbei die Neutralstellung als haptische Rückmeldung angezeigt sein, um dem Fahrer jederzeit den derzeit von ihm angesteuerten Vorgang zu vermitteln und eine einfache Rückstellbarkeit zu ermöglichen. So kann z. B. in der Neutralstellung eine Einrastung vorgesehen sein, so dass der Fahrer beim Durchlaufen der Neutralstellung jeweils eine haptische Rückmeldung, z. B. einen kurzzeitigen Stopp, erfährt.

Ergänzend zur Betätigungsstellung des Betätigungs-Parameters können auch die zeitlichen Änderungen ausgewertet werden; so kann ein Kick-down bzw. eine schnelle Betätigung der Fahrer (Geschwindigkeitseinstell)-Betätigungseinrichtung als Anforderung für eine schnelle Motorbeschleunigung verstanden und - wie als solches bekannt - für eine erhöhte Leistungsanforderung eingesetzt werden. Weiterhin kann ein schnelles Loslassen bzw. eine schnelle Rückstellung der Fahrer (Geschwindigkeitseinstell)-Betätigungseinrichtung auch als schneller Bremsvorgang gewertet werden, der z. B. von der Geschwindigkeits-Steuereinrichtung bevorzugt nicht als Rekuperationsbetrieb, sondern ganz oder ergänzend unter Einsatz der Betriebsbremsen bzw. Reibungsbremsen eingesetzt wird, um eine sichere Bremsung mit hoher Verzögerung zu ermöglichen. So kann ein schnelles oder vollständiges Loslassen der Fahrer-Betätigungseinrichtung auch als Notbremsung verstanden werden.

Bei Einsatz eines Elektromotors oder Hybridmotors mit elektrischer Rekuperation kann die Geschwindigkeits-Steuereinrichtung insbesondere vom Fahrer angeforderte Bremsvorgänge zunächst - soweit möglich oder sinnvoll - für die elektrische Rekuperation nutzen. Somit kann bei Erkennen einer Bremsanforderung durch den Fahrer zunächst die Motor-Steuereinrichtung mit einem Rekuperations-Anforderungssignal angesteuert werden. Bei z. B. höheren Verzögerungsanforderungen oder auch in Fahrbereichen mit ungünstigen Rekuperations-Eigenschaften, z. B. geringer Fahrgeschwindigkeit, kann die Geschwindigkeits-Steuereinrichtung auch direkt ein anderes Bremssystem, z. B. eine Dauerbremse (Retarder) als verschleißfreie Bremse, ansteuern.

Die Geschwindigkeits-Steuereinrichtung kann ergänzend auch die jeweiligen Fahrsituationen auswerten, z. B. die Fahrgeschwindigkeit und Reibungswerte der Straßen bzw. das bisherige Schlupfverhalten der Räder, wobei auch der differenzielle Schlupf überwacht werden kann, und dies bei der Ansteuerung berücksichtigen, z. B. auch bei Auswahl des Bremssystems bzw. der angeforderten Bremskräfte. So kann die Geschwindigkeits-Steuereinrichtung z.B. bei schlechteren Haftbedingungen erkennen, dass eine reine Verringerung der Antriebsleistung nicht ausreichend ist, und kann daraufhin bereits ein Bremssystem ansteuern.

Dies kann vorteilhaft durch die Geschwindigkeits-Steuereinrichtung mittels Brems-Anforderungssignalen erfolgen, wobei diese Brems-Anforderungssignale als XBR-Signale, d. h. - wie auch z. B. Anforderungen von Komfort-Regelsystemen oder Fahrstabilitäts-Regelsystemen - über ein Datensystem, z. B. einen Fahrzeugbus, an die elektronische Brems-Steuereinrichtung ausgegeben werden. Diese werden dann als XBR-Anfrage zur Ansteuerung der Bremse eingesetzt. Hierdurch wird eine kostengünstige Realisierung, insbesondere die Realisierung des Geschwindigkeitseinstell-Systems in einem Fahrzeug mit weiteren Regelsystemen, insbesondere Sicherheitssystemen und Komfort-Systemen ermöglicht, da derartige XBR-Anfragen als solche bekannt und normiert sind und eine hohe Sicherheit gewährleisten. Das Bremssystem hat bereits alle Informationen vorliegen, um eine Abwägung zwischen Rekuperation und Fahrstabilität z.B. basierend auf dem Schlupfverhalten der Räder und/oder des Bremsvermögens vorzunehmen, so dass vorteilhafterweise übergangslos alle zur Verfügung stehenden Bremsen benutzt werden können. Dies schließt vorzugsweise sowohl die Reibungsbremsen als auch die Dauerbremsen (z.B. einen Retarder oder einen als Generator betriebenen Elektromotor) ein sowie eine Berücksichtigung der Bremsverfügbarkeit des als Generator betriebenen Elektromotors im Sinne des Batteriefüllstands oder im anderen Fall eine Berücksichtigung der zu erwartenden Reibwertausnutzung, um einen ABS-Eingriff vorausschauend auszuschließen.

Indem der Fahrer somit grundsätzlich sowohl Beschleunigungs-Anforderungen als auch Brems-Anforderungen als Betätigungs-Parameter über eine gemeinsame Betätigungseinrichtung, insbesondere ein gemeinsames Fahr-Pedal bzw. Geschwindigkeitseinstell-Pedal eingibt, ist die bei Verwendung eines Gaspedals und separaten Brems-Pedals erforderliche aufwändige Umbedienung, d. h. zunächst das Loslassen des Gaspedals und das Umsteigen auf das Bremspedal, die einen erheblichen Zeitaufwand erfordern und in Stresssituationen eventuell zu langsam erfolgen, grundsätzlich nicht mehr erforderlich. Der Fahrer kann über die gemeinsame Fahrer-Betätigungseinrichtung seine Bremsanforderungen und Beschleunigungs-Anforderungen eingeben. Somit muss der Fahrer z. B. in Situationen, in denen die Fahrgeschwindigkeit zu reduzieren ist, nicht erst überlegen, ob ein Loslassen des Gaspedals mit der einsetzenden Schubwirkung des Motors ausreichend ist oder eine aktive zusätzliche Bremsung erforderlich ist; er kann durch die Einstellung des Betätigungs-Parameters direkt die Geschwindigkeit schneller oder langsamer senken, wobei die jeweilige Auswertung dann von der Geschwindigkeits-Steuereinrichtung erfolgt.

Somit ist grundsätzlich eine Einstellung der Fahrgeschwindigkeit durch den Fahrer über die eine Fahrer-Betätigungseinrichtung, insbesondere das Geschwindigkeitseinstell-Pedal, möglich. Ergänzend kann - insbesondere aus Sicherheitsgründen - eine zusätzliche Brems-Betätigungseinrichtung, insbesondere ein Bremspedal, vorgesehen sein, die - wie als solches bekanntbei Betätigung direkt eine Bremsanforderung ausgibt. Diese Fahrer-Bremsanforderung kann insbesondere für eine effektive Betriebsbremsung direkt an die Brems-Steuereinrichtung ausgegeben werden, d. h. nicht über die Geschwindigkeits-Steuereinrichtung. Somit ist für den Fahrer jederzeit sichergestellt, dass er bei einer erkannten Gefahr oder anderweitigen hohen Bremsanforderung - in an sich haptisch bekannter Weise - durch Betätigung des Bremspedals eine schnelle und sichere Bremsung auslösen kann. Eine derartige Fahrer-Bremsanforderung wird somit vorzugsweise in herkömmlicher Weise direkt von der elektronischen Brems-Steuereinrichtung ausgelesen und nicht als XBR-Anfrage über das Fahrzeug-Datensystem erkannt.

Auch der Einsatz von Dauerbremsen kann in für den Fahrer angenehmer Weise kombiniert werden; hierbei ist eine kombinierte Ansteuerung von Retardern und weiteren Bremssystemen vorteilhaft für das Bremsverhalten und die Verschleiß-Einstellung.

Somit wird auch das Fahrgefühl und das Bremsgefühl für den Fahrer verbessert; es wird ein Geschwindigkeitssteuer-System und ein Verfahren geschaffen, das Bremsungen ermöglicht, die für den Fahrer verzögerungs-orientiert gesteuert werden, anders als herkömmliche drehmomentorientierte Bremsungen. Der Fahrer steuert über die Fahrer-Betätigungseinrichtung die Fahrgeschwindigkeit, statt sich daran zu orientieren, welche Bremsanforderungen er einzugeben hat.

Die Erfindung wird im Folgenden anhand der beiliegenden Zeichnungen an einigen Ausführungsformen näher erläutert. Es zeigen:
- Fig. 1: ein Blockdiagramm eines Fahrzeugs mit einem Geschwindigkeitseinstell-System gemäß einer Ausführungsform der Erfindung mit einem Verbrennungsmotor, und einem Bremssystem, das zusätzlich eine Retarder-Bremseinrichtung aufweist;
- Fig. 2: ein Blockdiagramm eines Fahrzeugs mit einem Geschwindigkeitseinstell-System einer weiteren Ausführungsform mit einem Elektromotor und einem Betriebsbremssystem;
- Fig. 3: ein Blockdiagramm eines Fahrzeugs mit einem Geschwindigkeitseinstell-System in einer weiteren Ausführungsform mit einem Hybridsystem;
- Fig. 4: ein Flussdiagramm eines Verfahrens gemäß einer Ausführungsform der Erfindung;
- Fig. 5: ein Signaldiagramm der Betätigung des Geschwindigkeitseinstell-Pedals.

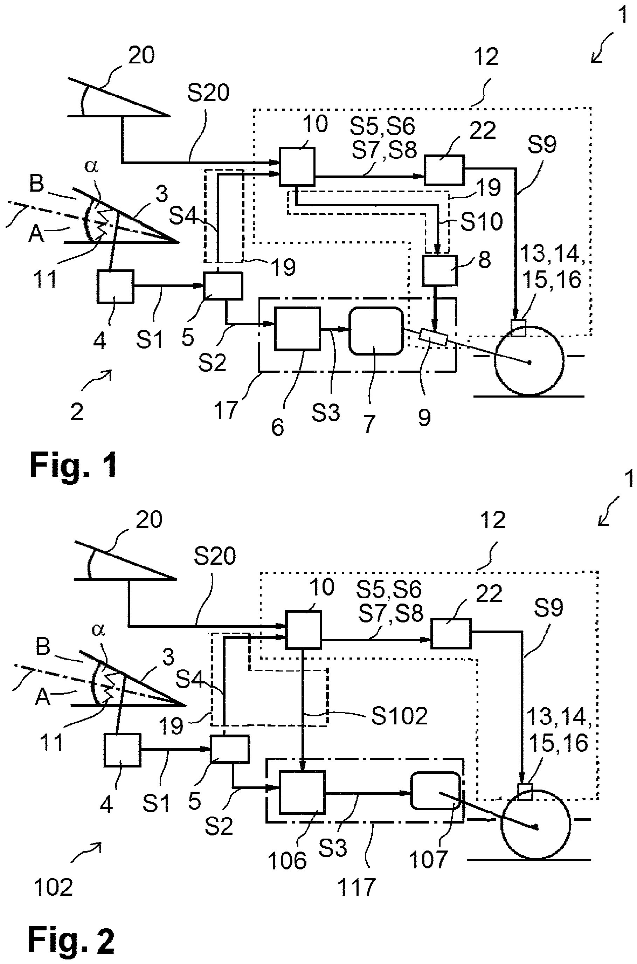

Ein Fahrzeug 1 ist hier insbesondere ein Nutzfahrzeug, das gemäß der Ausführungsform der Figur 1 ein Geschwindigkeitseinstell-System 2 aufweist, wobei das Fahrzeug 1 einen Antriebsstrang 17 und ein Bremssystem 12 aufweist und das Geschwindigkeitseinstell-System 2 wie nachfolgend beschrieben Elemente des Antriebsstrangs 17 und des Bremssystems 12 ansteuert:
Der Fahrer betätigt eine Fahrer-Betätigungseinrichtung, die gemäß dieser Ausführungsform als Geschwindigkeitseinstell-Pedal 3 ausgebildet ist. Das Geschwindigkeitseinstell-Pedal 3 kann in üblicher Ausbildung durch den Fuß des Fahrers entlang eines Pedalwinkels verstellbar sein, der in diesem Fall den Betätigungs-Parameter α darstellt. Es kann jedoch auch ein anderer Betätigungs-Parameter α vorgesehen sein, z. B. auch eine lineare Verstellung. Weiterhin kann der Fahrer auch z. B. eine Steuerfläche drücken und hierbei als Betätigungs-Parameter α eine Kraft oder einen Druck (Kraft pro Fläche) ausüben, d.h. ohne bzw. ohne relevante mechanische Verstellung der Betätigungseinrichtung; die Steuerfläche kann somit auch z. B. eine berührungssensitive Fläche, z. B. Touch-Fläche sein.

Der Pedalwinkel als Betätigungs-Parameter α wird von einem Betätigungs-Sensor 4 gemessen, der ein Sensorsignal S1 an eine Geschwindigkeits-Steuereinrichtung 5 ausgibt: somit stellt das Sensorsignal S1 den Betätigungs-Parameter α dar, insbesondere als Parameterwert zwischen einem unteren Sensorwert α_l (z. B. unbetätigte obere Position des Pedals) und einem oberen Sensorwert α_t (vollständig betätigte, untere Pedalposition). Die Geschwindigkeits-Steuereinrichtung 5 vergleicht das aufgenommene Sensorsignal S1 mit einem Referenzwert α0, der insbesondere eine Ruheposition oder Neutrallage insbesondere ein Ruhewinkel sein kann, der z. B. die halbe Pedalstellung zwischen dem Minimalwert α_l und dem Maximalwert α_t darstellen kann. Der Referenzwert α0 kann insbesondere vorgegeben sein, er kann - wie weiter unten ausgeführt wird - jedoch auch variabel sein, z. B. auch gelernt werden oder angepasst werden. Die Geschwindigkeits-Steuereinrichtung 5 vergleicht somit den durch das aktuelle Sensorsignal S1 repräsentierten aktuellen Pedalwinkel mit dem Referenzwert α0.

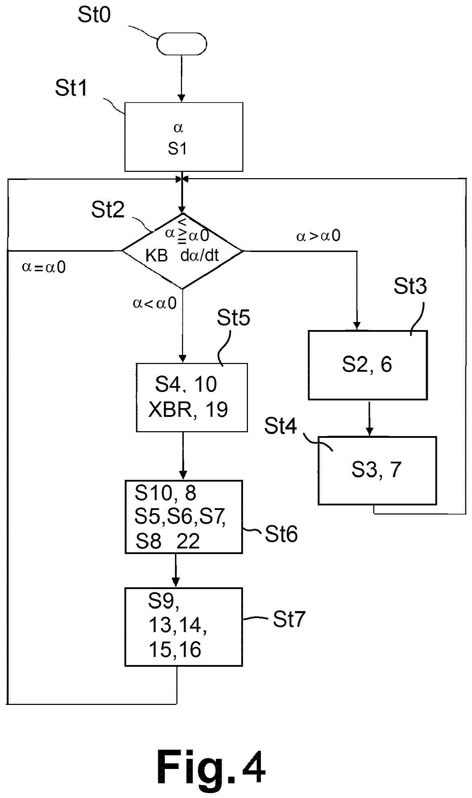

Dies ist entsprechend auch in Figur 4 gezeigt: nach dem Start in Schritt S10 werden gemäß Schritt St1 fortlaufend die Betätigungen des Geschwindigkeits-Einstellpedals 3 ausgelesen und in Abhängigkeit dieser Betätigung die Sensorsignale S1 erzeugt und an die Geschwindigkeits-Steuereinrichtung 5 ausgegeben. Die Geschwindigkeits-Steuereinrichtung 5 führt dann gemäß Schritt St2 eine Bewertung durch, bei der sie somit den aktuellen Pedalwinkel als Betätigungs-Parameter α mit dem Referenzwert α0 vergleicht und in Abhängigkeit von diesem Vergleich, gegebenenfalls noch zusätzlich in Abhängigkeit von weiteren Kriterien, Steuersignale S2, S4, S10, S102 ausgibt:

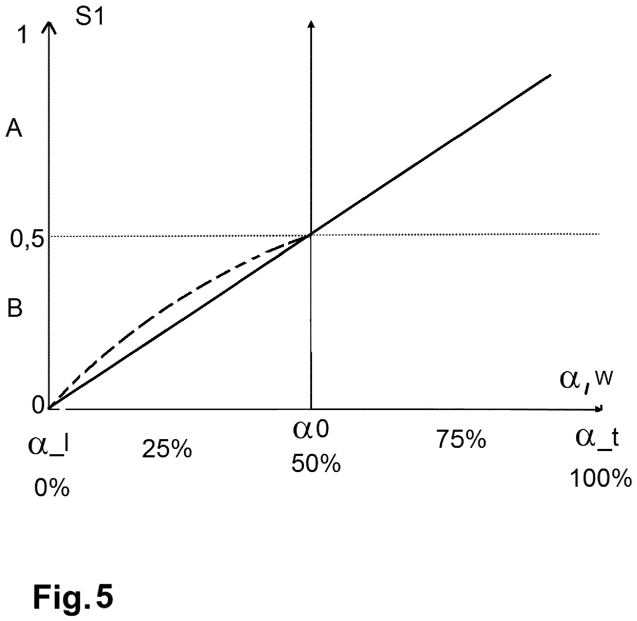

Figur 5 zeigt ein Signaldiagramm, bei dem auf der Abszisse der Betätigungs-Parameter α, hier somit der Pedalwinkel, oder ein entsprechender relativer Betätigungswert w zwischen 0 % und 100 % gezeigt ist, und auf der Ordinate ein analoger Signalwert des Sensorsignals S1.

Von der unbetätigten Position α_l oder w=0 bis zu dem Referenzwert α0, d.h. z.B. dem relativen Betätigungswert w = 0,5 (50%) deutet die Geschwindigkeit-Steuereinrichtung 5 auf einen Bremsvorgang, d. h. der Fahrer will durch die Betätigung des Geschwindigkeitseinstell-Pedals 3 hier einen Bremsvorgang einsteuern. Gemäß Fig. 1 befindet sich das Geschwindigkeitseinstell-Pedal 3 im Bremsbereich B.

Bei einer weiteren Betätigung, d. h. α > α 0 bzw. w > 0,5, befindet sich das Geschwindigkeitseinstell-Pedal 3 im Antriebsbereich A; dies wird als aktiver Fahrwunsch gedeutet, d.h. der Fahrer will aufgrund der aktiven Betätigung hier entsprechend den Antrieb des Fahrzeugs 1 beeinflussen. Dieses Verhalten entspricht somit dem üblichen Treten eines Gaspedals durch den Fahrer, mit dem dieser eine Antriebsleistung einsteuert, die somit z. B. das Halten der derzeitigen Fahrgeschwindigkeit v darstellen kann, und entsprechend bei weiterer Betätigung, d. h. einer Vergrößerung des Pedalwinkels, einen Beschleunigungsvorgang ausdrückt, d. h. eine Beschleunigung a = dv/dt ist hier > 0.

Somit kombiniert das Geschwindigkeits-Einstellpedal 3 ein übliches Geschwindigkeitspedal mit einem herkömmlichen Bremspedal, wobei die Neutrallage als α 0 den Übergang dieser Bereiche wiedergibt.

Der Referenzwert α0 kann somit fest vorgegeben sein; er kann jedoch auch variabel sein, z.B.
- als Funktion der Fahrgeschwindigkeit v,
- als Funktion der relativen Pedalgeschwindigkeit bzw. der Verstellgeschwindigkeit dα/dt bzw. eines zeitlichen Pedalgradienten,
- in Abhängigkeit von maximal durch den Fahrer eingestellten Pedalpositionen, wodurch die anatomischen Gegebenheiten berücksichtigt werden.

Gemäß Figur 5 wird somit bei anfänglicher Betätigung des Geschwindigkeits-Einstellpedals 3, z.B. bei Fahrtantritt, ein Bremsen erkannt; bei Treten des Pedals verringert der Fahrer zunächst den Bremswunsch und löst schließlich die Bremse, wenn er den Referenzwert α0 erreicht. Bei weiterer Betätigung wird der Antriebsbereich A erreicht, was als Betätigung eines Gaspedals, also als Antriebswunsch gewertet wird. Bei einer langsamen Verringerung des Pedalwinkels als Betätigungs-Parameter α wird entsprechend auch z. B. eine Geschwindigkeitsverringerung, d. h. Verringerung der Motorleistung eingegeben, und bei Unterschreiten des Referenzwertes α0 wird wieder erkannt, dass keine Antriebsleistung mehr eingesteuert werden soll, und wieder eine Bremsleistung einzusteuern ist.

Grundsätzlich kann z.B. in jedem Pedalwinkel ein schnelles Loslassen als Bremswunsch gedeutet werden, d.h. es wird gegebenenfalls die Antriebsleistung sofort beendet und ein Bremsvorgang, z.B. auch eine Notbremsung, eingesteuert. Entsprechend kann z.B. in jedem Pedalwinkel α ein schnelles Durchtreten als Antriebswunsch gedeutet werden, d.h. als Kick-down für eine hohe Beschleunigung a des Fahrzeugs 1.

Die Geschwindigkeits-Steuereinrichtung 5 steuert somit je nach der Bewertung in Schritt St2 nachfolgend gemäß Fig. 1 unterschiedliche Steuersignale S2, S4, S10, S102 aus:
Wenn die Geschwindigkeits-Steuereinrichtung 5 im Schritt St2 erkennt, dass eine Antriebsleistung einzusteuern ist, gibt sie in Schritt St3 ein Motor-Ansteuersignal S2 aus, hier an eine Motor-Steuereinrichtung 6, die wiederum in üblicher Weise in Schritt St4 mit einem Motor-Steuersignal S3 einen Fahrzeugmotor, hier somit einen Verbrennungsmotor 7 ansteuert.

Wenn die Geschwindigkeits-Steuereinrichtung 5 hingegen einen aktiven Bremsvorgang erkennt, steuert sie in Schritt St5 mit einem Brems-Anforderungssignal S4, das somit ein XBR-Signal darstellt und über ein fahrzeuginternes Kommunikationssystem, insbesondere einen Datenbus, z.B. einen CAN-Bus 19 übertragen wird, eine Brems-Steuereinrichtung 10 an. Die elektronische Brems-Steuereinrichtung 10 kann grundsätzlich unterschiedliche Bremseinrichtungen ansteuern, insbesondere kann sie in Schritt St6 z.B. durch Ausgabe elektrischer Brems-Steuersignale S5, S6, S7, S8 an ein oder mehrere elektropneumatische(s) Ventil(e), z.B. einen Achsmodulator und/oder ein Relais-Proportionalventil 22, der bzw. das nachfolgend in Schritt St7 pneumatische Bremssignale S9 an die Radbremsen 13, 14, 15, 16 ausgibt.

Weiterhin kann die elektrische Brems-Steuereinrichtung 10 auch über ein fahrzeuginternes Kommunikationssystem, insbesondere einen Datenbus, z.B. den gleichen CAN-Bus 19 oder einen anderen Datenbus, ein Retarder-Anforderungssignal S10 an eine Retarder-Steuereinrichtung 8 ausgeben, die eine Retarder-Bremsung durch einen Retarder 9 aussteuert.

Bei α = α0 d.h. wenn der Betätigungs-Parameter α gleich dem Referenzwert α0 ist, ist hingegen keine Ausgabe eines Signals erforderlich, so dass hier das Verfahren vor den Schritt St2 zurückgesetzt wird.

Die Auswahl des Bremssystems kann in Abhängigkeit von weiteren Kriterien KB erfolgen, wie eine oder mehrere der folgenden Brems-Auswahlkriterien KB: Fahrgeschwindigkeit v, erforderliche Sollverzögerung a_soll, Raddrehzahlen, Fahrzeugmasse, Achslastverteilung, Haftbedingungen oder Reibwert der Straße.

Das Fahrzeug 1 kann als Betriebsbremssystem 12 insbesondere ein EBS (elektronisches Bremssystem) aufweisen, sodass die Brems-Steuereinrichtung 10 nachfolgend elektrische Brems-Steuersignale S5, S6, S7, S8 zur Ansteuerung pneumatischer Radbremsen 13, 14, 15, 16 ausgibt. Hierbei kann z. B. an den Achsen Proportional-Relaisventile bzw. an jeder Achse ein Proportional-Relaisventil vorgesehen sein, das die Brems-Steuersignale S5, S6, S7 und/oder S8 aufnehmen kann und somit in Abhängigkeit hiervon einen pneumatischen Bremsdruck p an die jeweilige pneumatische Radbremse 12, 13, 14 oder 15 ausgibt.

Gemäß dieser Ausführungsform ist weiterhin, d. h. zusätzlich zu dem Geschwindigkeitseinstell-Pedal 3, ein Bremspedal 20 vorgesehen, das der Fahrer direkt betätigt und das über einen elektrischen Ausgang ein Fahrer-Bremssignal S20 an die Brems-Steuereinrichtung 10 ausgibt. Die Brems-Steuereinrichtung 10 kann somit direkt in Abhängigkeit vom Fahrer-Bremssignal S20, und/oder in Abhängigkeit von der Geschwindigkeitseinstell-Steuereinrichtung 5 die Betriebsbremsen ansteuern.

Durch das zusätzliche Fahrer-Bremspedal 20 ist hierbei eine erhöhte Sicherheit gegeben, insbesondere wenn die Betätigung der Geschwindigkeitseinstell-Steuereinrichtung 5 nicht als hinreichende Bremsanforderung verstanden wird, sodass der Fahrer hier jeder Zeit direkt eine Betriebsbremsung vornehmen kann.

An dem Geschwindigkeitseinstell-Pedal 3 ist vorteilhafter Weise eine Federvorspannung, d. h. eine Rückstellfeder 11 vorgesehen, die das Geschwindigkeitseinstell-Pedal 3 in die unbetätigte Stellung α_l verstellt. Die Rückstellfeder 11 kann linear, oder auch nicht-linear, insbesondere mit haptisch angenehmen Kurven (feeling curve) sein. Hier kann z. B. auch eine Rastung bei dem Referenzwert (Neutrallage) α0 vorgesehen sein, sodass der Fahrer die Neutralstellung "nicht fahren, nicht bremsen" haptisch erkennen kann.

Die Geschwindigkeits-Steuereinrichtung 5 kann somit insbesondere auch die Pedalbeschleunigung dα/dt auswerten und z. B. bei einer schnellen Betätigung (Kick-down) - wie es auch bei der Auslesung eines Gaspedals üblich ist - auf eine erhöhte Leistungsanforderung bzw. höhere Geschwindigkeit erkennen, als es die reine Pedallage der Pedalwinkel α direkt ausdrückt. Entsprechend kann wiederum auch ein schnelles Loslassen des Geschwindigkeitseinstell-Pedals 3, d. h. ein hoher negativer Wert von dα/dt, als schneller Bremsvorgang erkannt werden, auch wenn er von einer Pedalstellung α im Antriebsbereich A ausgeht. Somit kann gemäß Schritt St2 nicht nur der direkte Vergleich des Pedalwinkels α mit der Neutralstellung α0 sondern auch eine Bewertung von dα/dt, d. h. des dynamischen Verhaltens erfolgen, z.B. als Vergleich mit Schwellwerten SW1, SW2.

Bei der Ausführungsform der Figur 2 weist das Geschwindigkeitseinstell-System 102 statt eines Verbrennungsmotors einen Elektromotor 107 auf, dessen Motor-Steuereinrichtung 106 wiederum von der Geschwindigkeit-Steuereinrichtung 5 durch Motor-Anforderungssignale S2 angesteuert wird. Hierbei ist vorteilhaftweise vorgesehen, dass die Geschwindigkeits-Steuereinrichtung 5 durch Rekuperations-Anforderungssignale S102 auch eine Bremsleistung des Elektromotos 107 als Rekuperations-Betrieb bzw. Energierückgewinnung anfordern kann. Grundsätzlich kann weiterhin auch die Motor-Steuereinrichtung 106 entscheiden, wann sie einen Rekuperationsbetrieb einstellt. Auch bei dieser Ausführungsform ist vorteilhafter Weise gemäß Figur 2 zusätzlich ein Betriebsbremssystem mit einer Brems-Steuereinrichtung 10 und vorteilhafter Weise auch ein ergänzendes Bremspedal 20 vorgesehen.

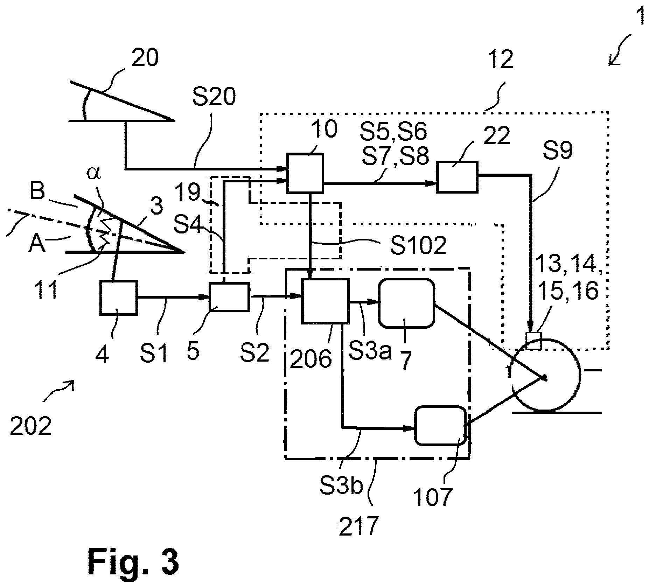

Bei der Ausführungsform der Figur 3 liegt ein Hybridsystem 202 vor, bei dem somit die Ausbildungen der Fig. 1 und 2 kombiniert sind. Somit liegt ein Hybrid-Antriebsstrang 217 mit einer Motor-Steuereinrichtung 206 vor, die einen Verbrennungsmotor 7 und/oder einen Elektromotor 107 ansteuern kann, die zusammen den Hybridmotor 207 bilden. Auch hier kann somit wiederum ein Rekuperationsbetrieb angefordert werden.

### Bezugszeichenliste (Teil der Beschreibung)

- 1: Fahrzeug
- 2, 102, 202: Geschwindigkeitseinstell-System
- 3: Geschwindigkeitseinstell-Pedal, Fahrer-Betätigungseinrichtung
- 4: Betätigungs-Sensor
- 5: Geschwindigkeits-Steuereinrichtung

- 6, 106, 206: Motor-Steuereinrichtung
- 7: Verbrennungsmotor
- 8: Retarder-Steuereinrichtung,
- 9: Retarder (Endurance brake)
- 10: Brems-Steuereinrichtung

- 11: Rückstellfeder, Federvorspannung
- 12: Bremssystem, das z.B. ein Betriebsbremssystem und ein Retarder-Bremssystem kombiniert,

- 13, 14, 15, 16: pneumatische Radbremsen

- 17, 117, 217: Antriebsstrang
- 19: fahrzeuginternes Kommunikationssystem, z. B. CAN-Bus

- 20: Fahrer-Bremspedal
- 22: Relais-Proportionalventil
- 107: Elektromotor

- α: Betätigungs-Parameter, z.B. Pedalwinkel
- α0: Referenzwert, insbesondere Ruhestellung, Neutrallage, Mittelwinkel, z. B. halbe Pedalstellung

- α_l: Minimalwert (z.B. unbetätigte Position des Geschwindigkeitseinstell-Pedals 3)
- α_t: Maximalwert (z.B. betätigte Position des Geschwindigkeitseinstell-Pedals 3)
- dα/dt: Betätigungs-Geschwindigkeit, z.B. Pedalbetätigungsgeschwindigkeit

- w: relativer Betätigungswert, zwischen 0 % und 100 %
- v: Fahrgeschwindigkeit
- a = dv/dt: Fahrzeug-Beschleunigung
- a_soll: Sollverzögerung
- A: Antriebsbereich, für α > α0 bzw. w > 50%,
- B: Bremsbereich, für α < α0 bzw. w < 50%

- S1: Sensorsignal
- S2: Motor-Anforderungssignal der Geschwindigkeits-Steuereinrichtung 5 an die Motor-Steuereinrichtung 6, 106, 206
- S3: Motor-Steuersignal der Motor-Steuereinrichtung 6 an den Verbrennungsmotor 7 und der Motor-Steuereinrichtung 106 an den Verbrennungsmotor 107
- S3a: Motor-Steuersignal 206 an den Verbrennungsmotor 7
- S3b: Motor-Steuersignal 206 an den Verbrennungsmotor 107

- S4: Brems-Anforderungssignal, insbesondere XBR-Signal
- S5, S6, S7, S8: Brems-Steuersignale
- S9: pneumatisches Bremssignal
- S10: Retarder-Anforderungssignal

- S20: Fahrer-Bremssignal an die Brems-Steuereinrichtung 10
- S102: Rekuperations-Anforderungssignal

- P: pneumatischer Bremsdruck

## Patentansprüche

1. Geschwindigkeitseinstell-System (2, 102, 202) zum Einstellen einer Fahrgeschwindigkeit (v) eines Fahrzeugs (1),
wobei das Geschwindigkeitseinstell-System (2, 102, 202) aufweist:
- eine Fahrer-Betätigungseinrichtung (3) zur Betätigung durch den Fahrer und Eingabe eines Betätigungs-Parameters (α) durch den Fahrer,
- einen Betätigungs-Sensor (4) zur Detektion des Betätigungs-Parameters (α) und Ausgabe eines Sensorsignals (S1),
- eine Geschwindigkeits-Steuereinrichtung (5) zur Aufnahme des Sensorsignals (S1) und Bewertung der Fahrer-Betätigung,
**dadurch gekennzeichnet, dass**
- die Geschwindigkeits-Steuereinrichtung (5) ausgelegt ist, den Betätigungs-Parameter (α) mit einem Referenzwert (α0) zu vergleichen und in Abhängigkeit des Vergleichs
- wenn der Betätigungs-Parameter (α) größer als der Referenzwert (α0) ist, ein Anforderungssignal (S2, S102) an eine Motor-Steuereinrichtung (6) auszugeben und
- wenn der Betätigungs-Parameter (α) kleiner als der Referenzwert (α0) ist, ein Brems-Anforderungssignal (S3, S4) an mindestens eine Steuereinrichtung (10) eines Bremssystems (12) auszugeben.

2. Geschwindigkeitseinstell-System (2, 102, 202) nach Anspruch 1, **dadurch gekennzeichnet, dass** der Betätigungs-Parameter eindimensional ist, z. B. ein Pedalwinkel (α) zwischen einem unbetätigten Wert (α_l), z. B. oberer Pedalstellung (α_l), und einem vollbetätigten Wert (α_t), z. B. unterer Pedalstellung (α_t).

3. Geschwindigkeitseinstell-System (2, 102, 202) nach Anspruch 1 oder 2, **dadurch gekennzeichnet, dass** die Geschwindigkeits-Steuereinrichtung (5) den aktuellen Betrag des Betätigungs-Parameters (α) mit einem Referenzwert (α0) vergleicht und bewertet, ob der aktuelle Betrag des Betätigungs-Parameters (α) größer oder kleiner als der Referenzwert (α0) ist.

4. Geschwindigkeitseinstell-System nach einem der vorherigen Ansprüche, **dadurch gekennzeichnet, dass** die Geschwindigkeits-Steuereinrichtung (5) bei Überschreiten des Referenzwertes (α0) auf eine Leistungsanforderung und/oder Ansteuerung der Motor-Steuereinrichtung (6) erkennt und
bei einem Unterschreiten des Referenzwertes (α0) auf eine BremsAnforderung und/oder eine Ansteuerung einer Brems-Steuereinrichtung (8, 10) erkennt.

5. Geschwindigkeitseinstell-System nach einem der vorherigen Ansprüche, **dadurch gekennzeichnet, dass** der Referenzwert (α0) in einem mittleren Bereich, vorzugsweise bei der Hälfte des Betätigungs-Parameters (α), z.B. einem halben Pedalweg liegt.

6. Geschwindigkeitseinstell-System nach einem der vorherigen Ansprüche, **dadurch gekennzeichnet, dass** der Referenzwert (α0) durch eine haptische Rückkopplung auf die Fahrer-Betätigungseinrichtung (3), z. B. als Widerstand und/oder Einrastung, markiert ist.

7. Geschwindigkeitseinstell-System nach einem der Ansprüche 3 bis **dadurch gekennzeichnet, dass** der Referenzwert (α0) variabel und/oder erlernbar ist, insbesondere nach einer oder mehreren der folgenden Kriterien
- abhängig von der Betätigungs-Geschwindigkeit (dα/dt) der Fahrer-Betätigungseinrichtung (3), z.B. durch Vergleich mit einem Schwellwert (K1),
- abhängig vom Gradienten der Betätigung, insbesondere des Betätigungs-Parameters (α) der Fahrer-Betätigungseinrichtung (3) (K2)
- abhängig vom maximalen und minimalen durch den Fahrer eingestellter Wert des Betätigungs-Parameters (α) der Fahrer-Betätigungseinrichtung (3) (K3).

8. Geschwindigkeitseinstell-System nach einem der vorherigen Ansprüche, **dadurch gekennzeichnet, dass** die Geschwindigkeits-Steuereinrichtung (5) das Brems-Anforderungssignal (S4) als externes Brems-Anforderungssignal (XBR) über ein fahrzeuginternes Kommunikationssystem (9), z.B. einen Fahrzeug-Bus, an die Brems-Steuereinrichtung (8, 10) ausgibt.

9. Geschwindigkeits-Einstellsystem nach einem der vorherigen Ansprüche, **dadurch gekennzeichnet, dass** zusätzlich zu der Fahrer-Betätigungseinrichtung (3) eine Brems-Betätigungseinrichtung, z. B. ein Bremspedal (20) vorgesehen ist, das bei Betätigung durch den Fahrer Fahrer-Bremssignale (S20) an die Brems-Steuereinrichtung (8, 10) ausgibt.

10. Geschwindigkeits-Einstellsystem nach einem der vorherigen Ansprüche, **dadurch gekennzeichnet, dass** die Geschwindigkeits-Steuereinrichtung (5) bei Erkennen eines Bremswunsches und/oder bei Ausgabe eines Brems-Anforderungssignals entscheidet, ob sie ein Rekuperations-Anforderungssignal (S102) an eine Motor-Steuereinrichtung (106, 206) eines Elektromotors oder Hybridmotors ausgibt, zur Einstellung eines Rekuperationsbetriebes zur Abbremsung des Fahrzeugs (1).

11. Fahrzeug (1), das aufweist:
ein Geschwindigkeits-Einstellsystem (2, 102, 202) nach einem der vorherigen Ansprüche,
einen Antriebsstrang (17, 117, 217) mit einem Fahrzeugmotor (7, 107) insbesondere einem Verbrennungsmotor, mindestens einem Elektromotor oder Hybridmotor (7,107),
ein Bremssystem, insbesondere ein Betriebsbremssystem (12),
vorzugsweise ein elektropneumatisches Betriebsbremssystem (12) und/oder ein elektro-mechanisches Betriebsbremssystem und/oder ein Retarder-Bremssystem (8, 9),
wobei die Geschwindigkeits-Steuereinrichtung (5) das Motor-Anforderungssignal (S2) an eine Motor-Steuereinrichtung (6, 106, 206) des Antriebsstrangs (17, 117, 217) und das Brems-Anforderungssignal (S4) an eine Steuereinrichtung (8, 10) des Bremssystems (12; 8, 9) ausgibt.

12. Fahrzeug (1) nach Anspruch 11, **dadurch gekennzeichnet, dass** der Antriebsstrang (17, 117, 217) einen Elektromotor (107) und/oder Hybridmotor (7,107) mit Elektromotor (107) aufweist, der bei Ausgabe eines Rekuperations-Anforderungssignals (S102) von der Brems-Steuereinrichtung (10) in einen Rekuperations -Betrieb zur EnergieRückgewinnung einstellbar ist.

13. Verfahren zum Einstellen einer Fahrgeschwindigkeit (v) eines Fahrzeugs (1), das einen Antriebsstrang (17, 117, 217) mit einem Fahrzeugmotor (7, 107) und ein Bremssystem (12; 8, 9) aufweist,
mit den Schritten:
- Messen eines Betätigungs-Parameters (α) einer Fahrer-Betätigungseinrichtung (3) und Erzeugen eines Sensor-Signals (S1) (St1)
- Bewerten der Betätigung der Fahrer-Betätigungseinrichtung durch Vergleichen des Sensorsignals (S1) und/oder des Betätigungs-Parameters (α) mit einem Referenzwert (α0) (St2),
- abhängig von dem Vergleich: Ausgabe eines Motor- Anforderungssignals (S2) an eine Motor-Steuereinrichtung (6, 106, 206) des Antriebsstrangs (17, 117, 217) (St3) wenn der Betätigungs-Parameter (α) größer als der Referenzwert (α0) ist, oder Ausgabe eines Brems-Anforderungssignals (S4) an eine Brems-Steuereinrichtung (8) des Bremssystems (12) (St5), wenn der Betätigungs-Parameter (α) kleiner als der Referenzwert (α0) ist,
- Ansteuerung des Fahrzeugmotors (7, 107, 207) durch die Motor-Steuereinrichtung (6, 106, 206) und/oder einer Bremse (13, 14, 15, 16; 9) des Bremssystems (12) durch die Brems-Steuereinrichtung (8).

14. Verfahren nach Anspruch 13, **dadurch gekennzeichnet, dass**
ein Fahrzeugmotor mit elektrischem Rekuperationsbetrieb angesteuert wird, wobei bei der Ausgabe von Brems-Anforderungssignalen auch Rekuperations-Anforderungssignale (S102) an eine Motor-Steuereinrichtung (106, 206) zur Einstellung eines Rekuperationsbetriebs ausgegeben werden.

15. Verfahren nach Anspruch 13 oder 14, **dadurch gekennzeichnet, dass** als Betätigungs-Parameter (α) eine Stellung der Fahrer-Betätigungseinrichtung (3) und/oder eine zeitliche Änderung (dα/dt) der Stellung bewertet wird,
insbesondere mit Erkennen eines Bremswunsches oder Beschleunigungswunsches bei schnellen zeitlichen Änderungen (dα/dt) des Betätigungs-Parameters (α).

16. Verfahren nach einem der Ansprüche 13 bis 14, **dadurch gekennzeichnet, dass**
eine Auswahl des Bremssystems abhängig von Brems-Auswahlkriterien (KB) erfolgt, die eine oder mehrere der folgenden Parameter bewerten: Fahrgeschwindigkeit (v), erforderliche Sollverzögerung (a_soll), Raddrehzahlen, Fahrzeugmasse, Achslastverteilung, Haftbedingungen/Reibwert der Straße.

## Claims

1. Speed setting system (2, 102, 202) for setting a driving speed (v) of a vehicle (1),
the speed setting system (2, 102, 202) comprising:
- a driver actuation device (3) for actuation by the driver and inputting of an actuation parameter (α) by the driver,
- an actuation sensor (4) for detecting the actuation parameter (α) and outputting a sensor signal (S1),
- a speed control device (5) for recording the sensor signal (S1) and evaluating the driver actuation,
**characterized in that**
- the speed control device (5) is designed to compare the actuation parameter (α) with a reference value (α0) and depending on the comparison
- if the actuation parameter (α) is greater than the reference value (α0), to output a request signal (S2, S102) to a motor control device (6), and
- if the actuation parameter (α) is smaller than the reference value (α0), to output a brake request signal (S3, S4) to at least one control device (10) of a brake system (12).

2. Speed setting system (2, 102, 202) according to claim 1,
**characterized in that** the actuation parameter is one-dimensional, e.g. a pedal angle (α) between an unactuated value (α_l), e.g. upper pedal position (α_l), and a fully actuated value (α_t), e.g. lower pedal position (α_t).

3. Speed setting system (2, 102, 202) according to either claim 1 or claim 2,
**characterized in that** the speed control device (5) compares the current value of the actuation parameter (α) with a reference value (α0) and evaluates whether the current value of the actuation parameter (α) is greater or smaller than the reference value (α0).

4. Speed setting system according to any of the preceding claims,
**characterized in that** the speed control device (5) detects a power request and/or activation of the motor control device (6) when the reference value (α0) is exceeded, and detects a brake request and/or activation of a brake control device (8, 10) when the reference value (α0) is undershot.

5. Speed setting system according to any of the preceding
claims, **characterized in that** the reference value (α0) lies in a medium range, preferably at half of the actuation parameter (α), e.g. half a pedal path.

6. Speed setting system according to any of the preceding claims,
**characterized in that** the reference value (α0) is marked by a haptic feedback to the driver actuation device (3), e.g. as resistance and/or engagement.

7. Speed setting system according to any of claims 3 to 6,
**characterized in that** the reference value (α0) is variable and/or learnable, in particular according to one or more of the following criteria
- depending on the actuation speed (da/dt) of the driver actuation device (3), e.g. by comparison with a threshold value (K1),
- depending on the gradient of the actuation, in particular the actuation parameter (α) of the driver actuation device (3) (K2)
- depending on the maximum and minimum value of the actuation parameter (α) of the driver actuation device (3) (K3) set by the driver.

8. Speed setting system according to any of the preceding claims,
**characterized in that** the speed control device (5) outputs the brake request signal (S4) as an external brake request signal (XBR) to the brake control device (8, 10) via an in-vehicle communication system (9), e.g. a vehicle bus.

9. Speed setting system according to any of the preceding claims,
**characterized in that,** in addition to the driver actuation device (3), a brake actuation device, e.g. a brake pedal (20), is provided which, when actuated by the driver, outputs driver brake signals (S20) to the brake control device (8, 10).

10. Speed setting system according to any of the preceding claims,
**characterized in that** the speed control device (5) decides, when a brake request is detected and/or when a brake request signal is output, whether to output a recuperation request signal (S102) to a motor control device (106, 206) of an electric motor or hybrid motor, for setting a recuperation mode for braking the vehicle (1).

11. Vehicle (1), which comprises:
a speed setting system (2, 102, 202) according to any of the preceding claims,
a drive train (17, 117, 217) having a vehicle engine (7, 107), in particular an internal combustion engine, at least one electric motor or hybrid motor (7, 107),
a brake system, in particular a service brake system (12), preferably an electro-pneumatic service brake system (12) and/or an electro-mechanical service brake system and/or a retarder brake system (8, 9), the speed control device (5) outputting the motor request signal (S2) to a motor control device (6, 106, 206) of the drive train (17, 117, 217) and the brake request signal (S4) to a control device (8, 10) of the brake system (12; 8, 9).

12. Vehicle (1) according to claim 11, **characterized in that** the drive train (17, 117, 217) comprises an electric motor (107) and/or hybrid motor (7, 107) having an electric motor (107), which can be set to a recuperation mode for energy recovery when a recuperation request signal (S102) is output by means of the brake control device (10).

13. Method for setting a driving speed (v) of a vehicle (1) which comprises a drive train (17, 117, 217) having a vehicle engine (7, 107) and a brake system (12; 8, 9), comprising the steps of:
- measuring an actuation parameter (α) of a driver actuation device (3) and generating a sensor signal (S1) (St1)
- evaluating the actuation of the driver actuation device by comparing the sensor signal (S1) and/or the actuation parameter (α) with a reference value (α0) (St2),
- depending on the comparison: outputting a motor request signal (S2) to a motor control device (6, 106, 206) of the drive train (17, 117, 217) (St3) if the actuation parameter (α) is greater than the reference value (α0), or outputting a brake request signal (S4) to a brake control device (8) of the brake system (12) (St5) if the actuation parameter (α) is smaller than the reference value (α0),
- controlling the vehicle engine (7, 107, 207) by means of the motor control device (6, 106, 206) and/or a brake (13, 14, 15, 16; 9) of the brake system (12) by means of the brake control device (8).

14. Method according to claim 13, **characterized in that** a vehicle engine is controlled by means of an electric recuperation mode, recuperation request signals (S102) also being output to a motor control device (106, 206) for setting a recuperation mode when brake request signals are output.

15. Method according to either claim 13 or claim 14, **characterized in that** a position of the driver actuation device (3) and/or a temporal change (dα/dt) of the position is evaluated as the actuation parameter (α),
in particular by means of detecting a brake request or acceleration request in the event of rapid temporal changes (dα/dt) of the actuation parameter (α).

16. Method according to either of claim 13 or claim 14, **characterized in that**
the brake system is selected depending on brake selection criteria (KB), which evaluate one or more of the following parameters: driving speed (v), required target deceleration (a_target), wheel speeds, vehicle mass, axle load distribution, adhesion conditions/road friction coefficient.

## Revendications

1. Système de réglage de vitesse (2, 102, 202) pour le réglage d'une vitesse de marche (v) d'un véhicule (1),
dans lequel le système de réglage de vitesse (2, 102, 202) présente :
- un dispositif d'actionnement par un conducteur (3) pour l'actionnement par le conducteur et la saisie d'un paramètre d'actionnement (α) par le conducteur,
- un capteur d'actionnement (4) pour la détection du paramètre d'actionnement (α) et l'émission d'un signal de capteur (S1),
- un dispositif de commande de vitesse (5) pour la réception du signal de capteur (S1) et l'évaluation de l'actionnement par le conducteur,
**caractérisé en ce que**
- le dispositif de commande de vitesse (5) est conçu pour comparer le paramètre d'actionnement (α) à une valeur de référence (α0) et en fonction de la comparaison
- lorsque le paramètre d'actionnement (α) est supérieur à la valeur de référence (α0), émettre un signal de demande (S2, S102) à un dispositif de commande de moteur (6) et
- lorsque le paramètre d'actionnement (α) est inférieur à la valeur de référence (α0), émettre un signal de demande de freinage (S3, S4) à au moins un dispositif de commande (10) d'un système de freinage (12).

2. Système de réglage de vitesse (2, 102, 202) selon la revendication 1, **caractérisé en ce que** le paramètre d'actionnement est unidimensionnel, par ex. un angle de pédale (α) entre une valeur non actionnée (α_l), par ex. une position de pédale supérieure (α_l), et une valeur totalement actionnée (α_t), par ex. une position de pédale inférieure (α_t).

3. Système de réglage de vitesse (2, 102, 202) selon la revendication 1 ou 2, **caractérisé en ce que** le dispositif de commande de vitesse (5) compare la valeur actuelle du paramètre d'actionnement (α) à une valeur de référence (α0) et évalue sur la valeur actuelle du paramètre d'actionnement (α) est supérieure ou inférieure à la valeur de référence (α0).

4. Système de réglage de vitesse selon l'une des revendications précédentes, **caractérisé en ce que** le dispositif de réglage de vitesse (5) détecte, en cas de dépassement de la valeur de référence (α0) une demande de puissance et/ou une commande du dispositif de commande de moteur (6) et détecte, en cas de passage en dessous de la valeur de référence (α0) une demande de freinage et/ou une commande d'un dispositif de commande de frein (8, 10).

5. Système de réglage de vitesse selon l'une des revendications
précédentes, **caractérisé en ce que** la valeur de référence (α0) se trouve dans une plage intermédiaire, de préférence à la moitié du paramètre d'actionnement (α), par ex. une demi course de pédale.

6. Système de réglage de vitesse selon l'une des revendications précédentes, **caractérisé en ce que** la valeur de référence (α0) est marquée par une rétroaction haptique sur le dispositif d'actionnement par le conducteur (3), par ex. sous forme de résistance et/ou d'enclenchement.

7. Système de réglage de vitesse selon l'une des revendications 3 à 6, **caractérisé en ce que** la valeur de référence (α0) est variable et/ou peut être apprise, en particulier selon un ou plusieurs des critères suivants
- en fonction de la vitesse d'actionnement (da/dt) du dispositif d'actionnement par le conducteur (3), par ex. par comparaison avec une valeur seuil (K1),
- en fonction de gradients de l'actionnement, en particulier du paramètre d'actionnement (α) du dispositif d'actionnement par le conducteur (3) (K2)
- en fonction d'une valeur maximale et d'une valeur maximale du paramètre d'actionnement (α) réglées par le conducteur du dispositif d'actionnement par le conducteur (3) (K3).

8. Système de réglage de vitesse selon l'une des revendications précédentes, **caractérisé en ce que** le dispositif de commande de vitesse (5) émet le signal de demande de freinage (S4) sous forme de signal de demande de freinage externe (XBR) par l'intermédiaire d'un système de communication (9), interne au véhicule, par ex. un bus de véhicule, au dispositif de commande de freinage (8, 10).

9. Système de réglage de vitesse selon l'une des revendications précédentes, **caractérisé en ce qu'**en plus du dispositif d'actionnement par le conducteur (3) un dispositif d'actionnement de frein, par ex. une pédale de frein (20) est prévue, qui émet, lors de l'actionnement par le conducteur, des signaux de freinage par le conducteur (S20) au dispositif de commande de freinage (8, 10).

10. Système de réglage de vitesse selon l'une des revendications précédentes, **caractérisé en ce que** le dispositif de commande de vitesse (5), lors de la détection d'un souhait de freinage et/ou lors de l'émission d'un signal de demande de freinage, décide s'il émet un signal de demande de récupération (S102) à un dispositif de commande de moteur (106, 206) d'un moteur électrique ou d'un moteur hybride, pour le réglage d'un fonctionnement de récupération pour le freinage du véhicule (1).

11. Véhicule (1), qui présente :
un système de réglage de vitesse (2, 102, 202) selon l'une des revendications précédentes,
une chaîne cinématique (17, 117, 217) comportant un moteur de véhicule (7, 107) en particulier un moteur à combustion interne, au moins un moteur électrique ou moteur hybride (7,107),
un système de freinage, en particulier un système de freinage de service (12), de préférence un système de freinage de service (12) électropneumatique et/ou un système de freinage de service électromécanique et/ou un système de freinage à ralentisseur (8, 9), dans lequel le dispositif de commande de vitesse (5) émet le signal de demande de moteur (S2) à un dispositif de commande de moteur (6, 106, 206) de la chaîne cinématique (17, 117, 217) et le signal de demande de freinage (S4) à un dispositif de commande (8, 10) du système de freinage (12 ; 8, 9).

12. Véhicule (1) selon la revendication 11, **caractérisé en ce que** la chaîne cinématique (17, 117, 217) présente un moteur électrique (107) et/ou moteur hybride (7,107) comportant un moteur électrique (107), qui est réglable lors de l'émission d'un signal de demande de récupération (S102) du dispositif de commande de frein (10) dans un fonctionnement de récupération pour la récupération d'énergie.

13. Procédé pour le réglage d'une vitesse de marche (v) d'un véhicule (1), qui présente une chaîne cinématique (17, 117, 217) comportant un moteur de véhicule (7, 107) et un système de freinage (12 ; 8, 9), comportant les étapes consistant à :
- de mesure d'un paramètre d'actionnement (α) d'un dispositif d'actionnement par le conducteur (3) et de génération d'un signal de capteur (S1) (St1)
- d'évaluation de l'actionnement du dispositif d'actionnement par le conducteur par comparaison du signal de capteur (S1) et/ou du paramètre d'actionnement (α) à une valeur de référence (α0) (St2),
- en fonction de la comparaison : d'émission d'un signal de demande de moteur (S2) à un dispositif de commande de moteur (6, 106, 206) de la chaîne cinématique (17, 117, 217) (St3) lorsque le paramètre d'actionnement (α) est supérieur à la valeur de référence (α0), ou d'émission d'un signal de demande de freinage (S4) à un dispositif de commande de freinage (8) du système de freinage (12) (St5), lorsque le paramètre d'actionnement (α) est inférieur à la valeur de référence (α0),
- de commande du moteur de véhicule (7, 107, 207) par l'intermédiaire du dispositif de commande de moteur (6, 106, 206) et/ou d'un frein (13, 14, 15, 16 ; 9) du système de freinage (12) par l'intermédiaire du dispositif de commande de frein (8).

14. Procédé selon la revendication 13, **caractérisé en ce qu'**un moteur de véhicule avec un fonctionnement de récupération électrique est commandé, dans lequel lors de l'émission de signaux de demande de freinage des signaux de demande de récupération (S102) sont également émis à un dispositif de commande de moteur (106, 206) pour le réglage d'un fonctionnement de récupération.

15. Procédé selon la revendication 13 ou 14, **caractérisé en ce qu'**en guise de paramètre d'actionnement (α) une position d'un dispositif d'actionnement par le conducteur (3) et/ou une modification temporelle (dα/dt) de la position est évaluée,
en particulier avec la détection d'un souhait de freinage ou d'un souhait d'accélération lors de modifications temporelles rapides (dα/dt) du paramètres d'actionnement (α).

16. Procédé selon l'une des revendications 13 à 14, **caractérisé en ce qu'**
une sélection du système de freinage est effectuée en fonction de critères de sélection de freinage (KB), qui évaluent un ou plusieurs des paramètres suivants : vitesse de marche (v), décélération de consigne requise (a_soll), vitesses de rotation des roues, masse du véhicule, répartition de la charge sur les essieux, conditions d'adhérence/valeur de frottement de la route.
